Europäisches Patentamt

European Patent Office

Office européen des brevets

(11) Publication number: **0 641 741 A1**

## EUROPEAN PATENT APPLICATION

(21) Application number: **93202573.7**

(22) Date of filing: **02.09.93**

(51) Int. Cl.⁶: **C01G 9/06**, **C22B 3/46**, //C22B19/00,C22B17/00

(43) Date of publication of application:
**08.03.95 Bulletin 95/10**

(84) Designated Contracting States:
**BE ES NL**

(71) Applicant: **NORANDA INC.**
**BCE Place,**
**181 Bay Street,**
**Suite 4100**
**Toronto**
**Ontario, M5J 2T3 (CA)**

(72) Inventor: **Houlachi, George**
**12 Maple, Ste-Anne de Bellevue**

**Ouebec H9X 2E4 (CA)**
Inventor: **Leroux, Gerry**
**4916 Ridge Road, Godmanchester**
**Ouebec J0S 1H0 (CA)**
Inventor: **Saint-Onge, Jean Pierre**
**14 Armand Frappier, Valleyfield**
**Ouebec J6T 4L5 (CA)**

(74) Representative: **Smulders, Theodorus A.H.J.,**
**Ir. et al**
**Vereenigde Octrooibureaux**
**Nieuwe Parklaan 97**
**NL-2587 BN 's-Gravenhage (NL)**

(54) Process for the removal of cobalt impurities from zinc sulphate solutions.

(57) A process for the removal of cobalt impurities from zinc sulphate solution is disclosed. The process comprises the step of carrying out cementation of the cobalt impurities on zinc dust in a high pressure vessel at a temperature between 98°C and about 150°C, preferably between 120 and 130°C.

Fig. 1

EP 0 641 741 A1

This invention relates to a process for the removal of cobalt impurities from zinc sulphate solutions which are used in the electrolytic recovery of zinc.

In the practice of electrowinning of zinc, return acid from the electrolysis is used to leach the zinc calcine. The obtained product is an impure zinc sulphate solution containing about 150 g/L of zinc and varying amounts of the components present in the concentrate. The presence of impurities in the electrolyte renders impossible the zinc deposition process from the impure feed solution thus necessitating a purification stage prior to the electrowinning of zinc.

The conventional method of purifying the impure feed solution consists of cementing the impurities such as copper, cadmium and cobalt with zinc powder. The kinetics of the cementation reaction are favourable for the copper and cadmium while for the cobalt reaction, about 600 times the stoichiometric requirements for zinc powder is needed to efficiently remove this impurity from the electrolyte. Use of reaction additives, such as $Sb_2O_3$ or $As_2O_3$, and long retention times (2.5 h) are also required while maintaining a solution temperature of 95°C, to ensure a residual cobalt concentration of less than 0.2 mg/L. The disadvantages of these systems are:

a) Long retention times necessitating several purification reactors occupying a large surface area of the plant.

b) High heating cost for maintaining the electrolyte at 95°C for 3.0 h of operation.

Several purification methods have been developed to improve the efficiency of cementation reaction such as using vibratory reactors to increase the hydrodynamics of the system or by using different additives than $Sb_2O_3$ or $As_2O_3$, i.e., $CuSo_4$, $SnSo_4$ or $PbSo_4$. However, all these processes suffer from at least one of the above mentioned disadvantages. Moreover, these processes are costly to operate thus offering a non-economical solution to the problem of slow kinetics for the cobalt cementation reaction.

It is therefore the object of the present invention to improve the rate of cementation with zinc dust and thus reduce the requirements for purification tanks.

It is also an object of the present invention to reduce the zinc dust consumption for the cobalt cementation reaction.

The process in accordance with the present invention consists in carrying out cementation of the cobalt impurities on zinc dust in a relatively high pressure vessel at a temperature between 98°C and about 150°C, preferably between 120 and 130°C.

The cementation reaction is preferably carried out under mechanical agitation to keep the zinc particles in suspension and in contact with the cobalt ions in solution.

The reaction vessels to carry out the cementation reaction can be autoclaves or pipe reactors providing conditions for attaining high solution temperatures and favourable mass transfer characteristics.

Some typical results of tests using the concept of high temperature cementation are given in the following example and the results are also shown in the accompanying drawings in which:

Figure 1 illustrates the effect of solution temperature on the rate of cobalt cementation, and

Figure 2 illustrates the effect of temperature on the residual cobalt concentration after 60 min. of reaction time.

Example

The tests were carried out using a laboratory scale autoclave of 1-L in volume.

Several tests were conducted using a zinc sulphate solution from the thickener overflow of the first stage of the purification system used at Canadian Electrolytic Zinc Ltd. (CEZinc). This system is disclosed in Canadian Patent No. 1,046,288. The first test was a control test simulating the normal operating conditions of the CEZinc purification process (atmospheric pressure and 98°C). The other tests were carried out at a temperature ranging from 110°C to 150°C and at a pressure in the range of 10 to 60 psig in order to prevent boiling of the solution.

Zinc dust at a concentration of 3.0 g/L, (~50% smaller than the present CEZinc consumption) was added to the solution at the beginning of the tests after adjusting the pH to 4. Antimony trioxide was added to the solution at a concentration of 2 mg/L. A small volume of nitrogen gas (~10 cc/min) was continuously passed through the electrolyte during the tests to vent evolved hydrogen out of the reactor.

Samples of electrolyte were withdrawn at time intervals of 20 min, and were immediately filtered. The solutions were analyzed for their cobalt and cadmium content.

The results of these tests are shown in the following Table I.

## TABLE 1

### EFFECT OF TEMPERATURE ON Co$^{2+}$ AND Cd$^{2+}$ CEMENTATION

| Test | Temp. °C | Zn g/L | Sb$_2$O$_3$ mg/L | Cu$^{2+}$ mg/L | pH | Cobalt Concentration (mg/L) Reaction Time (min) | | | | | | Cadmium Concentration (mg/L) Reaction Time (min) | | | | | |
|---|---|---|---|---|---|---|---|---|---|---|---|---|---|---|---|---|---|
| | | | | | | Initial | 20 | 40 | 60 | 90 | 120 | Initial | 20 | 40 | 60 | 90 | 120 |
| 1 | 98 | 3.0 | 2 | - | 4.0 | 8 | 2.6 | 2.0 | 1.2 | 0.61 | 0.4 | 9.2 | 0.9 | 0.7 | 0.5 | 0.5 | 0.7 |
| 2 | 110 | 3.0 | 2 | - | 4.0 | 8 | 1.4 | 0.94 | 0.44 | - | - | 9.2 | 0.6 | 0.4 | 0.6 | - | - |
| 3 | 120 | 3.0 | 2 | - | 4.0 | 8 | 0.69 | 0.3 | 0.12 | - | - | 9.2 | 0.4 | 0.4 | <0.4 | - | - |
| 4 | 130 | 3.0 | 2 | - | 4.0 | 8 | 0.48 | 0.14 | 0.10 | - | - | 9.2 | 0.4 | 0.5 | 1.4 | - | - |
| 5 | 140 | 3.0 | 2 | - | 4.0 | 8 | 0.44 | 0.61 | 0.44 | - | - | 9.2 | 1.1 | 2.0 | 2.5 | - | - |
| 6 | 150 | 3.0 | 2 | - | 4.0 | 8 | 1.0 | 1.2 | 1.0 | - | - | 9.2 | 2.1 | 1.6 | 1.5 | - | - |
| 7 | 130 | 3.0 | 4 | - | 4.0 | 12 | 0.78 | 0.32 | 0.39 | - | - | 10 | 0.8 | 2.5 | 1.5 | - | - |
| 8 | 130 | 3.0 | 2 | 5 | 4.0 | 12 | 0.48 | 0.24 | 0.18 | - | - | 10 | 1.5 | 1.5 | 1.7 | - | - |
| 9 | 130 | 2.0 | 2 | - | 4.0 | 12 | 0.72 | 0.88 | 0.72 | - | - | 10 | 1.4 | 3.7 | 2.8 | - | - |
| 10 | 130 | 2.0 | 4 | 5 | 4.0 | 12 | 0.48 | 0.32 | 0.36 | - | - | 10 | 2.7 | 3.3 | 3.8 | - | - |

Note: The duration of tests Nos. 2 to 10 was 60 min.

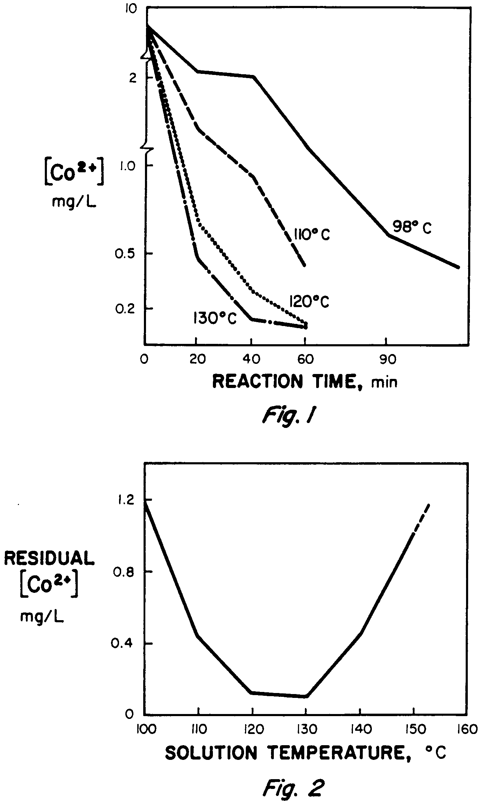

The effect of solution temperature is illustrated in Figure 1 indicating that as the temperature of the solution is increased, an improved rate of cobalt cementation is obtained. The highest rate of cobalt cementation is observed at a solution temperature of 130°C (Test 4), resulting in a residual Co$^{2+}$ concentration of 0.14 mg/L after a reaction time of 40 min (Fig. 1). In the case of the control test (Test 1) carried out at 98°C, the residual cobalt concentration after a similar reaction time was 2.0 mg/L and was decreased to 0.4 mg/L after 120 min.

Increasing the temperature to 140°C and 150°C resulted in a decrease in the rate of cementation (Tests 5 and 6). The reaction rates, however, at 140°C and 150°C were higher than those observed for the control test at 98°C. Figure 2 illustrates the residual cobalt concentration after 60 minutes reaction time at temperatures ranging from 100°C to about 150°C.

EP 0 641 741 A1

Tests were also carried out to see the effects of adding $Sb_2O_3$ and $Cu^{2+}$. Increasing the $Sb_2O_3$ concentration from 2.0 mg/L to 4.0 mg/L at 130°C resulted in a decrease in the rate of cobalt cementation (Test 7). Addition of 5 mg/L $Cu^{2+}$ ions to the solution did not affect the efficiency of cementation reaction (Test 8). The presence of both $Sb_2O_3$ at 4.0 mg/L and $Cu^{2+}$ ions at 5 mg/L showed a beneficial effect when cementing cobalt using 2.0 g/L zinc dust instead of 3.0 g/L (Tests 9, 10). These results indicate that the cobalt impurity may be cemented using less than 3.0 g/L of zinc dust.

The major advantages of the cementation process in accordance with the present invention can be cited as follows:

a) Improved rates of cementation with zinc dust, i.e., a reduction of about 85% in the reaction time was achieved by carrying out the cementation reaction at a temperature between 98°C and about 150°C, preferably 120-130°C, instead of 98°C. As a result, the requirements for purification tanks are reduced producing smaller plant size and savings on capital cost.

b) Reduction in zinc dust consumption for the cobalt cementation reaction. It is estimated that based on the CEZinc process of purification, a reduction of 30% in the zinc dust consumption can be achieved.

Although the invention has been disclosed, by way of example, with reference to a preferred embodiment, it is to be understood that it is not limited to such embodiment and that other alternatives are envisaged within the scope of the claims.

**Claims**

1. A process for the removal of cobalt impurities from zinc sulphate solution comprising the step of carrying out cementation of the cobalt impurities on zinc dust in a high pressure vessel at a temperature between 98°C and about 150°C.

2. A process as defined in claim 1, wherein cementation is carried out at a temperature between 120-130°C.

3. A process as defined in claim 1, wherein the cementation reaction is carried out under mechanical agitation to keep the zinc particles in suspension and in contact with the cobalt ions in solution.

4. A process as defined in claim 1, 2 or 3, wherein the high pressure vessel is an autoclave or a pipe reactor providing conditions for allowing high solution temperature without boiling and favourable mass transfer characteristics.

5. A process as defined in claim 1, 2 or 3, wherein cementation on zinc dust is carried out in the presence of $Sb_2O_3$ and $Cu^{2+}$ ions.

4

*Fig. 1*

*Fig. 2*

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y,D | CA-A-1 046 288 (NORANDA MINES LTD) 16 January 1979 * claims * | 1,3-5 | C01G9/06 C22B3/46 //C22B19:00, C22B17:00 |
| Y | FR-A-2 528 719 (COFREMMI) 23 December 1983 * claims * | 1,3-5 | |
| A | EP-A-0 134 053 (SAMIM SOCIETÀ AZIONARIA MINERO-METALLURGICA S.P.A) 13 March 1985 * claims * | 1,5 | |
| A | US-A-3 826 648 (BODSON) 30 June 1974 * claims * | 1,5 | |
| A | JOURNAL OF METALS, vol. 38, no. 8 , August 1986 , WARRENDALE, PA, US pages 49 - 52 TORRES ET AL. 'Cadmium Purification with a Vibrating Reactor' * page 49, line 1 - line 22 * | 1,3 | |
| A | HYDROMETALLURGY. vol. 30, no. 1/3 , June 1992 , AMSTERDAM NL pages 445 - 461 TOZAWA ET AL. 'cOMPARISON BETWEEN PURIFICATION PROCESSES FOR ZINC LEACH SOLUTIONS WITH ARSENIC AND ANTIMONY TRIOXIDES' * page 453, line 5 - page 457, line 6 * | 1,5 | |

TECHNICAL FIELDS
SEARCHED      (Int.Cl.6)

C22B

-/--

The present search report has been drawn up for all claims

| Place of search | Date of completion of the search | Examiner |
|---|---|---|
| THE HAGUE | 25 January 1994 | Wittblad, U |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | DATABASE WPI<br>Week 7826, 1978<br>Derwent Publications Ltd., London, GB;<br>AN 78-47296A<br>& SU-A-516 275 (NON-FERR METALS RES) 17 August 1977<br>* abstract * | 1,5 | |

-----

TECHNICAL FIELDS
SEARCHED      (Int.Cl.6)

The present search report has been drawn up for all claims

| Place of search | Date of completion of the search | Examiner |
|---|---|---|
| THE HAGUE | 25 January 1994 | Wittblad, U |

EPO FORM 1503 03.82 (P04C01)